Europäisches Patentamt

European Patent Office

Office européen des brevets

(19)

(11) Numéro de publication: **0 021 920**
**B1**

(12) # FASCICULE DE BREVET EUROPEEN

(45) Date de publication du fascicule du brevet:
04.05.83

(51) Int. Cl.³: **H 02 K 44/02**

(21) Numéro de dépôt: **80400803.5**

(22) Date de dépôt: **05.06.80**

(54) Pompe électromagnétique à conduction pour métal liquide.

(30) Priorité: **07.06.79 FR 7914585**

(43) Date de publication de la demande:
**07.01.81 Bulletin 81/1**

(45) Mention de la délivrance du brevet:
**04.05.83 Bulletin 83/18**

(84) Etats contractants désignés:
**CH DE GB IT LI SE**

(56) Documents cités:
**DE-C-837 579**
**FR-A-949 066**
**FR-A-2 131 087**
**SU-A-176 184**

(73) Titulaire: **NOVATOME, 20 Avenue Edouard Herriot,
F-92350 Le Plessis Robinson (FR)**

(72) Inventeur: **Carbonnel, Henri, 11 avenue Beauséjour,
F-92160 Antony (FR)**

(74) Mandataire: **Dupuy, Louis et al, CREUSOT-LOIRE 15 rue
Pasquier, F-75383 Paris Cedex 8 (FR)**

BUNDESDRUCKEREI BERLIN

Pompe électromagnétique à conduction pour métal liquide

L'invention concerne un perfectionnement apporté aux pompes électromagnétiques à conduction pour métal liquide, c'est à dire les pompes où le métal liquide est mis en circulation sous l'effet d'un champ magnétique et d'un courant électrique perpendiculaires entre eux et traversant un canal ascendant de pompage du métal liquide (le métal peut être par exemple constitué par de l'aluminium).

Ces pompes comportent généralement un circuit magnétique pour la création d'un champ traversant le canal de pompage du métal et une spire en matériau réfractaire à l'intérieur de laquelle se trouve du métal liquide en contact électrique avec le métal contenu dans le canal ascendant de pompage, au niveau de la zone soumise au champ magnétique.

De telles pompes ont déjà fait l'objet d'un brevet français n° 2 164 493.

On a représenté sur la fig. 1 de la présente demande de brevet une pompe du type décrit dans le brevet n° 2 164 493.

Une pompe de ce type comprend un canal ascendant de pompage du métal liquide 1 qui traverse l'entrefer d'un premier circuit électromagnétique en forme de culasse 3. Cette culasse est associée à une bobine 4 enroulée autour d'un de ses côtés et qu'on alimente en courant alternatif de façon à créer dans la tranche de métal liquide située dans l'entrefer 2 un champ magnétique horizontal.

La pompe comporte en outre un deuxième circuit magnétique en forme de cadre 5, une bobine d'alimentation 6 enroulée autour d'un côté du cadre 5 et une spire conductrice 7 de section rectangulaire entourant un autre côté du cadre 5.

On alimente la bobine 6 en courant alternatif de façon à induire un courant alternatif dans la boucle 7. Cette boucle 7 est constituée de métal liquide contenu dans une enveloppe réfractaire 8. Cette enveloppe 8 est reliée au canal 1 par deux embouts 9 et 9' comportant chacun une ouverture mettant en communication l'intérieur de l'enveloppe 8 avec l'intérieur du canal 1 si bien que le métal peut circuler entre l'enveloppe 8 et le canal 1. La tranche de métal située entre les deux embouts 9 et 9' est parcourue par le courant alternatif généré dans la boucle 7.

On dispose la boucle 7 de façon que le courant circulant entre les embouts 9 et 9' soit orthogonal au champ magnétique créé dans l'entrefer 2 et à l'axe du canal 1.

Pour que la force électromagnétique verticale qui est alors créée dans la tranche de métal située entre les embouts 9 et 9' reste toujours ascendante, il est nécessaire de veiller à ce que courant et champ magnétique soient approximativement en phase.

Si de telles pompes donnent satisfaction, on constate cependant que, dans le temps, les particules non conductrices de l'électricité qui sont véhiculées par le métal liquide ont tendance à se déposer dans la boucle 7 par laquelle est engendré le courant qui passe dans le canal 1 de métal liquide.

Dans les pompes que l'on vient de décrire, la boucle 7 est par conséquent difficile à nettoyer. Pour pallier cet inconvénient, une demande française a été déposée (publiée sous le numéro 2 360 206). Elle concerne une variante des pompes décrites ci-dessus dans laquelle la boucle est rectiligne et débouche sur le bain de métal par lequel les courants induits se referment.

De telles pompes sont très intéressantes sous l'aspect du nettoyage de la boucle, mais les performances obtenues sont plus faibles que celles des machines, objets du brevet n° 2 164 493. Ceci est dû en particulier au fait que la boucle, rectiligne, est couplée de manière plus lâche à la branche du cadre 5 que dans le brevet 2 164 493. De plus, le trajet de la boucle étant bien plus long que dans les pompes du brevet 2 164 493, la boucle oppose une résistance importante au courant induit.

On connaît également le brevet soviétique Su 176 184 qui décrit une pompe à conduction pour métal liquide comportant d'une part un premier circuit magnétique doté d'au moins un entrefer et deux autres circuits magnétiques disposés symétriquement par rapport au premier et d'autre part un canal ascendant de pompage du métal liquide traversant l'entrefer du premier circuit magnétique et deux boucles renfermant du métal liquide et communiquant avec le canal ascendant de pompage à l'endroit où celui-ci traverse l'entrefer et enlaçant chacune l'une des branches de l'un des deux autres circuits magnétiques.

Toutefois, ce dispositif est compliqué puisqu'il comporte deux boucles et trois circuits magnétiques et que ces trois circuits sont disposés de telle façon que leur encombrement soit important.

En outre, en traversant les boucles, le métal liquide subit des perturbations du point de vue hydraulique, ce qui diminue les performances de la pompe et entraine des particules véhiculées par le métal liquide à se déposer dans les boucles. Ceci est d'autant plus grave que la forme des boucles rend celles-ci difficiles à nettoyer.

La présente invention tente de remédier aux inconvénients des pompes connues jusqu'à présent.

La présente invention vise une pompe à induction de conception simple et d'encombrement réduit comportant une boucle présentant le trajet le plus court possible de manière à réduire la résistance opposée au courant induit, mais dont la circulation du métal pompé ne soit pas entravée par une perte de charge importante. En outre, cette boucle doit être facile à nettoyer.

La présente invention concerne une pompe électromagnétique à conduction immergée pour métal liquide comportant:

— une partie en matériau réfractaire immergeable dans un bain de ce métal liquide

— un premier circuit magnétique comportant une branche horizontale noyée dans le matériau réfractaire et dotée d'un entrefer

— un deuxième circuit magnétique fermé, doté d'une bobine d'alimentation et comportant une branche horizontale noyée dans le matériau réfractaire

— ménagés dans le matériau réfractaire, un canal ascendant de pompage du métal liquide traversant l'entrefer du premier circuit magnétique et une spire renfermant du métal liquide et communiquant avec le canal ascendant de pompage à l'endroit où celui-ci traverse l'entrefer et enlasant l'une des branches du deuxième circuit magnétique.

Selon l'invention, la spire est constituée par un canal en forme de U renversé dont le plan médian est un plan vertical passant par l'entrefer du premier circuit. Les deux jambes du U plongent dans le bain de métal, pour fermer la spire, l'une des jambes étant en fait constituée d'un tronçon du canal ascendant et l'autre jambe enlaçant partiellement la branche horizontale du deuxième circuit magnétique.

Dans une telle pompe, la boucle contourne au plus près le circuit magnétique du transformateur qui induit les courants dans la spire. Les performances obtenues sont ainsi améliorées.

Selon une autre caractéristique de l'invention, la section du canal constituant la boucle diminue de façon continue en partant du bas des jambes du U jusqu'à la zone traversant l'entrefer.

En outre la boucle est prévue de façon à ce que le métal circulant dans la pompe subisse le moins de perturbations possible du point de vue hydraulique.

Selon une autre caractéristique de l'invention, la partie immergeable de la pompe est constituée de l'empilement d'un ensemble de pièces en matériau réfractaire comportant des évidements qui constituent le canal ascendant de pompage et la spire.

Afin de bien faire comprendre l'invention, nous allons maintenant décrire à titre d'exemple non limitatif une pompe à conduction selon l'invention.

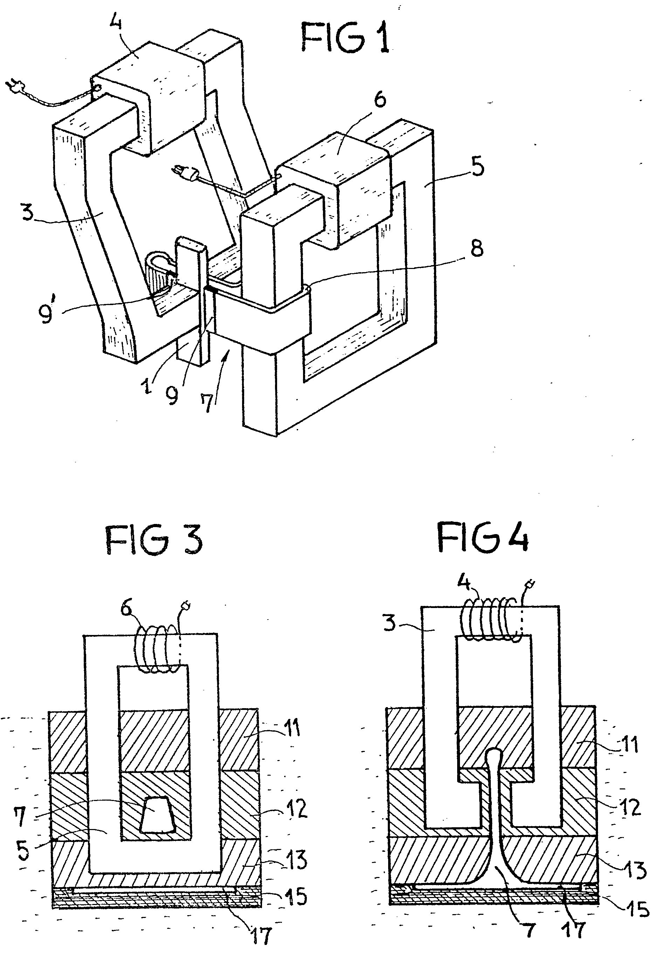

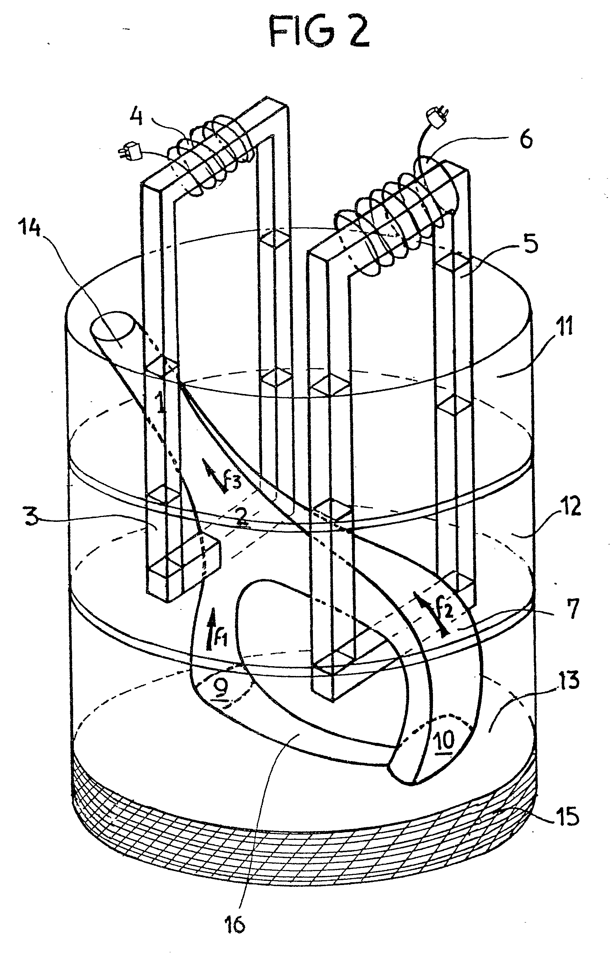

La fig. 2 représente une vue en perspective d'une pompe selon l'invention.

La fig. 3 représente une coupe de la pompe de la fig. 2 effectuée au niveau du plan du circuit magnétique 5.

La fig. 4 représente une coupe de la pompe de la fig. 2 effectuée au niveau du plan du circuit magnétique 3.

Sur les diverses figures, les éléments correspondants portent les mêmes repères.

Un premier circuit magnétique 3 en forme de C est équipé d'une bobine 4 qui peut être alimentée en courant alternatif de façon à créer une induction dans le circuit et de ce fait, un champ magnétique horizontal au niveau de l'entrefer 2 ménagé entre les deux branches du circuit.

Un deuxième circuit magnétique 5 équipé d'une bobine 6 est un transformateur qui induit un courant électrique dans une spire 7 en forme du U renversé et contenant du métal liquide lorsque la bobine 6 est alimentée en courant alternatif. Le courant électrique induit dans la spire 7 passe à travers l'entrefer 2. Il se referme en utilisant le bain de métal dans la zone 16 de son parcours puisque la spire est ouverte sur le bain par les orifices 9 et 10.

Les circuits magnétiques 3 et 5 sont feuilletés et constitués de tôles en alliage magnétique au cobalt pour haute température.

Le métal liquide est pompé par action conjuguée du champ magnétique et du courant de la boucle dans l'entrefer 2. Il est aspiré au niveau des orifices 9 et 10; il est refoulé par le canal ascendant 1, comme l'indiquent les flèches f1, f2 et f3.

La spire 7 est ménagée dans des pièces en matériau réfractaire 11, 12 et 13 qui sont immergées dans le bain de métal liquide. Le métal liquide pénétrant par les orifices 9 et 10 remplit la spire 7; à ce moment là , si les bobines 4 et 6 sont alimentées, il y a naissance d'un courant induit dans cette boucle et, par l'action conjuguée du champ magnétique qui règne dans l'entrefer 2, le métal est pompé vers l'orifice de décharge 14. Avant son arrivée dans les orifices 9 et 10, le métal liquide est filtré par un filtre 15 immergé dans le bain de métal, et fixé ou appuyé contre la pièce 13. Une chambre d'aspiration 17 est ménagée entre la pièce 13 et le filtre 15.

Quant à la partie haute de la pompe, en particulier les bobines 4 et 6, elles sont placées dans un carter refroidi par une circulation d'air.

La pompe qui vient d'être décrite présente de nombreux avantages. En particulier il n'y a de zone morte en aucun endroit de la spire 7. Ainsi toute formation de dépôt sur les parois de la boucle est évitée et celle-ci n'a pas besoin d'être nettoyée. Au cas où un nettoyage serait nécessaire, les orifices 9, 10 et 14 sont largement dimensionnés et permettent un nettoyage mécanique aisé en tout point de la machine d'autant plus que la section du canal constituant la spire diminue de façon continue en partant du bas des jambes du U jusqu'à la zone traversant l'entrefer.

En outre, le trajet du métal dans la pompe est très court et il subit le moins de perturbations possible du point de vue hydraulique; ceci, ajouté à un entrefer également très réduit et à un couplage serré entre la boucle 7 et le circuit magnétique 5, concourt à l'obtention de bonnes performances.

L'invention ne se limite pas au mode de réalisation qui vient d'être décrit; elle en comporte au contraire toutes les variantes et l'on peut modifier les points de détail sans pour autant sortir du cadre de l'invention.

Ainsi les pièces en matériau réfractaire pourraient être plus nombreuses ou bien réduites au nombre de 1 ou 2. Elles pourraient également être disposées d'une autre manière ou avoir une autre forme que la forme de galette qui leur a été donnée dans l'exemple décrit ci-dessus.

La forme de la boucle pourrait être également légèrement différente, à condition toutefois qu'elle enjambe le circuit magnétique 5, en le serrant suffisamment et que le trajet du métal dans la boucle subisse le moins de perturbations possible du point de vue hydraulique.

On pourrait également envisager de placer un troisième circuit magnétique identique au circuit magnétique 5 et symétrique de celui-ci par rapport au circuit magnétique 3. Ce circuit magnétique serait doté d'une bobine alimentée par un courant alternatif en phase avec celui des bobines 4 et 6. Le troisième circuit magnétique donnerait naissance à un courant dans la spire 7 qui s'ajouterait arithmétiquement au courant produit par le circuit magnétique 5. On renforcerait ainsi le courant de conduction et par suite les performances débit-pression de la pompe.

## Revendications

1. Pompe électromagnétique à conduction pour métal liquide comportant:

— une partie en matériau réfractaire immergeable dans un bain de métal liquide

— un premier circuit magnétique (3) comportant une branche horizontale noyée dans le matériau réfractaire et dotée d'un entrefer (2)

— un deuxième circuit magnétique fermé (5), doté d'une bobine d'alimentation (6) et comportant une branche horizontale noyée dans le matériau réfractaire

— ménagés dans le matériau réfractaire, un canal ascendant (1) de pompage du métal liquide traversant l'entrefer (2) du premier circuit magnétique (3) et une spire (7) renfermant du métal liquide et communiquant avec le canal ascendant (1) de pompage à l'endroit où celui-ci traverse l'entrefer (2) et enlaçant l'une des branches du deuxième circuit magnétique (5), caractérisée par le fait que la spire (7) est constituée par un canal en forme de U renversé et dont le plan médian est un plan vertical passant par l'entrefer (2) du premier circuit (3) et que les jambes du U plongent dans le bain de métal, pour fermer la spire, l'une des jambes étant en fait constituée d'un tronçon du canal ascendant (1) et l'autre jambe enlaçant partiellement la branche horizontale du deuxième circuit magnétique (5).

2. Pompe électromagnétique à conduction selon la revendication 1, caractérisée par le fait que la section du canal constituant la spire (7) diminue de façon continue en partant du bas des jambes du U jusqu'à la zone traversant l'entrefer (2).

3. Pompe électromagnétique à conduction selon l'une des revendications 1 ou 2, caractérisée par le fait que la partie immergeable de la pompe est constituée de l'empilement d'un ensemble de pièces (11, 12 et 13) en matériau réfractaire comportant des évidements qui constituent le canal ascendant (1) de pompage et la spire (7).

## Patentansprüche

1. Elektromagnetische Pumpe für flüssiges Metall bestehend aus:

— einem Teil aus feuerfestem Material das in eine flüssige Metallschmelze eintauchbar ist,

— einem ersten einen Luftspalt (2) aufweisenden Magnetkreis (3) mit einem horizontalen in das feuerfeste Material eingebetteten Schenkel,

— einem zweiten luftspaltlosen Magnetkreis (5) mit einer Magnetspule (6) und einem horizontalen in dem feuerfesten Material eingelassenen Schenkel,

— einem den Luftspalt (2) des ersten Magnetkreises durchquerenden Steigkanal (1) zur Förderung des flüssigen Metalls und einer das flüssige Metall enthaltenden Windung (7), die mit dem Fördersteigkanal (1) bei dessen Durchquerung durch den Luftspalt in Verbindung steht und sich um einen der Schenkel des zweiten Magnetkreises (5) windet, wobei diese in dem feuerfesten Material angeordnet sind, dadurch gekennzeichnet, daß die Windung (7) aus einem umgekehrten U-förmigen Kanal besteht und dessen Mittelebene eine durch den Luftspalt (2) des ersten Magnetkreises (3) laufende senkrechte Ebene ist, und daß zum Schließen der Windung die U-förmigen Schenkel in die Metallschmelze tauchen, wobei einer der Schenkel aus einem Abschnitt des Steigkanals (1) gebildet ist und sich der andere Schenkel teilweise um den horizontalen Schenkel des zweiten Magnetkreises (5) windet.

2. Elektromagnetische Pumpe nach Anspruch 1, dadurch gekennzeichnet, daß der Abschnitt des die Windung (7) bildenden Kanals vom Fuße der U-förmigen Schenkel ausgehend bis zu der den Luftspalt (2) durchquerenden Zone stetig abnimmt.

3. Elektromagnetische Pumpe nach einem der Ansprüche 1 oder 2, dadurch gekennzeichnet, daß das eintauchbare Pumpenteil durch die Aufstapelung von einem Satz Teilen (11, 12 und 13) aus feuerfestem Material mit Aussparungen gebildet ist, die den Fördersteigkanal (1) und die Windung (7) bilden.

## Claims

1. Electromagnetic conduction pump for liquid metal, comprising:

— a part made of refractory material, which can be immersed in a bath of liquid metal,
— a first magnetic circuit (3) comprising a horizontal arm embedded in the refractory material and possessing a gap (2),
— a second, closed magnetic circuit (5) possessing a feed coil (6) and comprising a horizontal arm embedded in the refractory material, and
— arranged in the refractory material, a rising channel (1) for pumping the liquid metal passing through the gap (2) of the first magnetic circuit (3), and a turn (7) containing liquid metal and communicating with the rising pumping channel (1) at the point where the latter passes through the gap (2), and encircling one of the arms of the second magnetic circuit (5),

characterized in that the turn (7) consists of an inverted U-shaped channel, the median plane of which is a vertical plane passing through the gap (2) of the first circuit (3), and in that the limbs of the U dip into the bath of metal to close the turn, one of the limbs in fact consisting of a section of the rising channel (1) and the other limb partially encircling the horizontal arm of the second magnetic circuit (5).

2. Electromagnetic conduction pump according to claim 1, characterized in that the cross-section of the channel forming the turn 7 decreases continuously from the bottom of the limbs of the U up to the zone passing through the gap (2).

3. Electromagnetic conduction pump according to one of claims 1 or 2, characterized in that the immersible part of the pump consists of a stack of a set of parts (11, 12 and 13) made of refractory material, possessing recesses which form the rising pumping channel (1) and the turn (7).

# FIG 1

# FIG 3

# FIG 4

# FIG 2